# EUROPÄISCHE PATENTANMELDUNG

(11) **EP 1 731 015 A1**
(43) Veröffentlichungstag der Anmeldung: **13.12.2006**
(21) Anmeldenummer: 05012473.4
(22) Anmeldetag: 10.06.2005
(51) Int. Cl.: A01D 34/68

(54) **Rasenmäher**

(71) Anmelder: Kress, Werner, D-89077 Ulm (DE)
(72) Erfinder: Kress, Werner, 89077 Ulm (DE)
(74) Vertreter: Sawodny, Michael-Wolfgang

(57) **Zusammenfassung**

Die Erfindung betrifft einen Rasenmäher
umfassend
- eine Schneideinrichtung, die ein Messer (9) mit einer Antriebswelle (11) aufweist;
- einen Motor (1), der eine Abtriebswelle (3) aufweist;

Die Erfindung ist gekennzeichnet durch die folgenden Merkmale:
- der Motor (1) ist eine Verbrennungskraftmaschine,
- die Abtriebswelle (3) des Motors (1) ist mit der Antriebswelle (11) des Messers (9) über eine kraft übertragende Verbindung verbunden und
die kraft übertragende Verbindung umfasst eine Fliehkraftkupplung (7).

## Beschreibung

Die Erfindung betrifft einen Rasenmäher, insbesondere einen handgeführten mit Motorantrieb durch einen Verbrennungsmotor. Dabei kommt als Verbrennungsmotor insbesondere ein Benzinmotor in Betracht.

Rasenmäher mit Verbrennungsmotoren sind aus einer Vielzahl von Schriften bekannt geworden, beispielsweise der DE 80 33 233 U. Rasenmäher gemäß dem Stand der Technik weisen eine Schneideinrichtung auf. Die Schneideinrichtung besteht vorzugsweise aus einem langgestreckten Messerblatt, das in der Mitte seiner Länge um eine vertikale Achse drehbar gelagert ist. Das Messerblatt ist an seinen beiden Längenabschnitten beidseits der genannten Drehachse jeweils mit einer Schneide versehen, der eine Längenabschnitt auf der einen Schmalkante, und der andere Längenabschnitt auf der gegenüberliegenden Schmalkante. Das Messerblatt ist in vielen Fällen im Wesentlichen horizontal angeordnet. Es kann auch eine gewisse Neigung gegen die Horizontalebene aufweisen, so dass die Schneideinrichtung nicht nur ihre Schneid- (oder Abschlag-) Funktion erfüllt, sondern auch eine Förderfunktion. Hierdurch wird ein Luftstrom erzeugt, der das abgeschlagene Gras in eine bestimmte Richtung fördert.

Bei den Rasenmähern gemäß dem Stand der ist die Abtriebswelle des Motors stets gleichzeitig die Antriebswelle des Messers So wird bei der DE 80 33 233 U die mit Windflügeln versehene Schneidvorrichtung direkt von der Antriebswelle des Motors angetrieben. Der in der DE 80 33 233 U beschriebene Rasenmäher weist des weiteren im den die Schneidvorrichtung aufnehmenden Raum begrenzenden Gehäusewand von dem Luftdruck abhängig arbeitende, selbsttätig öffnende und schließende Rückschlagventile angeordnet sind.

Durch solche selbsttätig wirkende Rückschlagventile wird gemäß der DE 80 33 233 U erreicht, dass in den Raum der Schneidvorrichtung zusätzliche Luft bei entstehendem Unterdruck eintreten kann und somit der Unterdruck aufgehoben wird. Je nach der Stärke des auftretenden Unterdruckes öffnen sich ein oder mehrere Rückschlagklappen automatisch, wobei dann die fehlende Luft von oben angesaugt wird.

Bei dem in der DE 80 33 233 U gezeigten Rasenmäher handelt es sich um einen handgeführten Rasenmäher, bei dem eine Bedienungsperson an einem Holm angreift, um den Rasenmäher über den Rasen hinweg zu führen und somit dessen Bewegungsbahn zu steuern. Außerdem bringt die Bedienungsperson über den Holm die Schubkraft zum Verfahren des Rasenmähers auf.

Das Gehäuse des Rasenmähers weist einen Auslass auf, durch welchen der grasführende Luftstrom austritt. Der Luftstrom kann dabei an einer Seite des Rasenmähers austreten - d. h. seitlich der Bewegungsbahn, die der Rasenmäher ausführt. In neuerer Zeit sind aber Rasenmäher im Allgemeinen mit Grasfangbehältern ausgestattet. Ein solcher Grasfangbehälter hat eine Öffnung, die dem genannten Auslass des Gehäuses entspricht, und die an das Gehäuse über den Gehäuseauslass angeschlossen ist. Der Grasfangbehälter befindet sich meist im hinteren Bereich des Gehäuses.

Der Grasfangbehälter kann einen Sack aus Gewebe oder anderen schlaffen Materialien aufweisen. Er kann aber auch aus einer Box mit starren Wänden bestehen. In jedem Falle ist die Wandung oder wenigstens ein Teil der Wandung des Grasfangbehälters luftdurchlässig. Handelt es sich um ein Gewebe, so ist dies von Natur aus porös. Handelt es sich um eine Box mit starren Wänden, so sind die Wände oder wenigstens einige der Wände perforiert. Bei Rasenmähern ohne Grasfangbehälter ist der Gehäuseauslass mit einer Klappe versehen, die um eine Schwenkachse schwenkbar gelagert ist. Der grasführende Luftstrom prallt gegen die Platte und öffnet diese, so dass der grasführende Luftstrom austreten kann.

Die Mahd wird aus dem Rasenmäher in einen Fangsack mit Hilfe von Luft gefördert.

Nachteilig bei den Rasenmähern mit Verbrennungsmotor gemäß dem Stand der Technik war, dass die Rasenmäher nur mit verhältnismäßig hohem Kraftaufwand angelassen werden konnten und bei Servicearbeiten, wie beispielsweise dem Wechsel des Fangkorbes üblicherweise außer Betrieb gesetzt werden mussten.

Ein weiterer Nachteil war, dass die Rasenmäher um den Austritt von Betriebsmittel wie Motoröl oder Kraftstoff zu verhindern im wesentlichen horizontal gelagert werden mussten.

Ein weiterer Nachteil bei den Rasenmähern gemäß dem Stand der Technik ist, dass die Mäher bei Schnitthöhen von 20mm und weniger, die Mäher Funktionsfähigkeit einbüßen, d.h. Schnitthöhen von weniger als 20mm konnten mit Mähern nicht effektiv, d.h. nicht mit ausreichender Mähleistung realisiert werden.

Der Erfindung liegt die Aufgabe zugrunde, die Nachteile des Standes der Technik zu überwinden und insbesondere einen Rasenmäher anzugeben, der sich gegenüber bekannten Rasenmähern durch eine verbesserte Bedienbarkeit auszeichnet

Gemäß einem weiteren Aspekt der Erfindung soll ein Rasenmäher angegeben werden, der in beliebigen Positionen aufstellbar ist

Des Weiteren soll ein Rasenmäher angegeben werden, der sich durch eine verbesserte Mähleistung auszeichnet

Insbesondere soll auch ein Rasenmäher angegeben werden mit den Schnitthöhen geringer als 20 mm ohne Beeinträchtigung der Funktionsfähigkeit des Mähers erreicht werden können.

Des Weiteren soll ein Rasenmäher angegeben werden, der in seiner Messerdrehzahl individuell anpassbar ist.

Erfindungsgemäß wird dies dadurch erreicht, das bei einem Rasenmäher mit einem Verbrennungsmotor, der eine Abtriebswelle aufweist und eine Schneideinrichtung, die von einer Antriebswelle angetrieben wird, die Abtriebswelle des Motors mit der Antriebswelle der Schneideinrichtung über eine kraftübertragende Verbindung verbunden ist und die kraftübertragende Verbindung eine Fliehkraftkupplung umfasst.

Durch ein Entkoppeln der Abtriebswelle des Motors von der Antriebswelle der Schneideinrichung wird erreicht, dass der Verbrennungsmotor sehr leicht, d.h. ohne großen Kraftaufwand im Leerlauf gestartet werden kann. Die Antriebswelle der Schneideinrichtung kann nach Starten des Motors über die erfindungsgemäße Fliehkraftkupplung an die Abtriebswelle des Motors gekoppelt werden. Werden beispielsweise Servicearbeiten am Rasenmäher, wie das Wechseln des Fangbehälters durchgeführt, ist es bei der erfindungsgemäßen Ausführungsform nicht mehr notwendig, den Verbrennungsmotor außer Betrieb zu setzen und erneut zu starten, sondern der Verbrennungsmotor wird von der Abtriebswelle des Motors über die Fliehkraftkupplung entkoppelt. Während die Schneideinrichtung in 3 Sekunden stillgesetzt wird, dreht der Verbrennungsmotor im Leerlauf weiter. Nachdem der Fangbehälter getauscht ist kann die Abtriebswelle wieder an die Antriebswelle der Schneideinrichtung gekoppelt und der Mähvorgang fortgesetzt werden. Durch die Verbindung der Antriebswelle der Schneideinrichtung mit der Abtriebswelle des Verbrennungsmotors über eine Fliehkraftkupplung wird ein großer Nutzervorteil erzielt und die Bedienbarkeit verbessert.

Bevorzugt ist die Verbrennungskraftmaschine derart ausgestaltet ist, dass der Rasenmäher ohne Betriebsmittelverlust in allen möglichen Position aufstellbar ist, insbesondere auch in einer vertikalen Position. Die im Stand der Technik bekannten Rasenmäher mit Verbrennungsmotor konnten nur in einer im Wesentlichen horizontalen Position aufgestellt werden, da ansonsten Betriebsmittel wie ÖI oder Kraftstoff ausgeflossen sind. Durch die Verwendung einer Verbrennungskraftmaschine wie oben beschrieben, lässt sich der erfindungsgemäße Rasenmäher in einer bevorzugten Ausführungsform auch in eine aufrechte Position, d.h. in eine vertikale Position z.B. auf wenigstens drei Lagerpunkten oder einer Lagerfläche aufstellen. Dies ermöglicht gegenüber den Rasenmähern gemäß dem Stand der Technik eine besonders raumsparende Aufbewahrung.

Die Drehzahl der Verbrennungskraftmaschine, insbesondere des Benzinmotors liegt bevorzugt im Bereich zwischen 5000 U/min und 7500 U/min, besonders bevorzugt im Bereich 5500 U/min bis 7000 U/min, insbesondere bevorzugt im Bereich 5800 U/min bis 6600 U/min.

Die erfindungsgemäßen Motoren zeichnen sich dadurch aus, dass die trotz einer hohen Drehzahl von beispielsweise 6600 U/min noch einen niedrigen Geräuschpegel aufweisen, der insbesondere im gesetzlich zulässigen Geräuschepegel-Bereich liegt.

Um ein in Betrieb setzen des Rasenmähers in der abgestellten Nicht-Betriebs-Position, insbesondere in der vertikalen Position zu verhindern ist eine Sicherheitseinrichtung vorgesehen. Die Sicherheitsvorrichtung kann eine Schalteinrichtung sein, die die Stromzufuhr zur Zündeinrichtung des Verbrennungsmotors unterbricht, wenn der Rasenmäher in einer Nicht-Betriebsposition, insbesondere in der vertikalen Position abgestellt wird.

In einer besonders bevorzugten Ausführungsform wird bei einem handgeführten Rasenmäher der am Gehäuse befestigte Führungsholm um eine horizontale Schwenkachse verschwenkt, so dass der Mäher beispielsweise auf der Gehäuserückwand in vertikaler Position abgestellt werden kann. Bei Mähern mit Führungsholm kann die Sicherheitseinrichtung ein Schalter sein, der die Stromzufuhr zur Zündeinrichtung unterbricht, wenn der Führungsholm aus der Arbeitsposition bzw. Betriebsposition in eine Nicht-Betriebsposition verschwenkt wird.

In einer bevorzugten Ausführungsform der Erfindung verläuft die Abtriebswelle des Motors entlang einer ersten vertikalen Achse und die Antriebswelle entlang einer zweiten vertikalen Achse. Bevorzugt liegen erste und zweite Achse parallel zueinander und weisen einen Abstand zueinander auf.

In einer weitergebildeten Ausführungsform der Erfindung ist die kraftübertragende Verbindung ein Riementrieb mit zwei Riemenscheiben.

Der Riementrieb hat den Vorteil, dass über die Riemenscheiben der Riementrieb eine an die Verbrennungskraftmaschine angepasste Untersetzung aufweist. Auf diese Art wird erreicht, dass an der Schneideinrichtung ein vorbestimmtes Drehmoment erreicht wird. Insbesondere kann gegenüber Rasenmähern gemäß dem Stand der Technik durch eine entsprechende Untersetzung das Drehmoment an der Schneideinrichtung, insbesondere am Messer erhöht werden.

Bevorzugt liegt die Untersetzung im Bereich von 1:1,2 bis 1:6, vorzugsweise Im Bereich von 1:1, 5 bis 1:3, insbesondere im Bereich von 1:1,8 bis 1:2,2 liegt. Die Drehzahl des Verbrennungsmotors liegt bevorzugt im Bereich 5000 U/min bis 7500 U/min, besonders bevorzugt im Bereich 5500 U/min bis 7000 U/min, insbesondere im bereich 5800 U/min bis 6600 U/min. Beträgt beispielsweise die Drehzahl 6000 U/min und weist der Riementrieb weist eine 1:2-Untersetzung auf, so beträgt dann die Drehzahl der Schneideinrichtung ungefähr 3000 U/min. Es ist somit durch die Wahl der Untersetzung möglich eine ganz bestimmte Umdrehungszahl und damit Drehmoment am Messer einzustellen. Die freie Einstellbarkeit durch die Wahl der Untersetzung ist deswegen vorteilhaft, weil die Drehzahl am Messer und damit das Drehmoment bei vorgegebener Motordrehzahl für unterschiedliche Rasenmäher optimal eingestellt werden kann. So kann die Drehzahl am Messer auf die Schnittform, die Gehäuseform, die Messerform sowie den Schnittkreisdurchmesser angepasst werden.

In einer weiteren bevorzugten Ausführungsform ist der Mäher so ausgestaltet, dass die vom Messer von unten her angesaugte Luft in ausreichender Menge und unter ausreichendem Druck in einen Ringkanal gelangt, so dass die Mahd vollständig und problemlos nach außen abgeführt werden kann.

Um die Lärmentwicklung, insbesondere im Dauerbetrieb, des Rasenmähers zu minimieren, kann eine Schalteinrichtung vorgesehen sein, mit der die Motordrehzahl in Abhängigkeit von der Mähleistung, die am Messer zur Verfügung gestellt werden soll, eingestellt werden kann. Beispielsweise kann der Motor, falls der Mäher eine 1:2-Untersetzung aufweist, beispielsweise in der hohen Leistungsstufe mit einer Drehzahl von ungefähr 6000 U/min laufen, so dass am Messer eine Drehzahl von ungefähr 3000 U/min vorliegt und in der Dauerleistungsstufe mit ungefähr 5200 U/min, so dass eine Drehzahl am Messer von ungefähr 2600 U/min vorliegt. Die hohe Leistungsstufe wird nur benötigt, wenn hohes Gras gemäht werden soll.

Selbstverständlich könnte anstelle der Einstellung der Motordrehzahl auch die Untersetzung geändert werden, beispielsweise mit Hilfe eines Getriebes.

Derartige Einstellungen wie oben beschrieben sind gemäß der Erfindung möglich, da Abtrieb und Antrieb voneinander getrennt sind.

Zur Unterstützung der Mähleistung kann in einer weitergebildeten Ausführungsform ein weiterer, zweiter Ringkanal vorgesehen sein, der den genannten - nunmehr ersten - Ringkanal umgibt. Der zweite Ringkanal wird dabei aus der Umfangswand des ersten Ringkanals und einer radial außen liegenden Hüllwand, beispielsweise der Gehäusevorderwand, gebildet. Der zweite Ringkanal wird dabei den ersten Ringkanal nur auf einem Teil von dessen Umfang umschließen, und zwar bevorzugt - in Fahrtrichtung des Rasenmähers gesehen - auf einem vorderen Umfangsbereich. Ein Umschlingungswinkel von wenigen Grad, beispielsweise 5 bis 10 Grad, kann ausreichen. Besser sind 20 bis 30 Grad.

Auch 180 Grad sind denkbar. Der zweite Ringkanal ist mit einem Lufteinlass versehen, durch welchen Luft von außen eintreten kann. Es ist aber auch denkbar, den zweiten Ringkanal mit Luft zu versorgen, die von einem Lüfterrad angesaugt wird, das sich auf der Motorwelle befindet und somit vom Motor angetrieben wird. Die Unterkante der Hüllwand wird im Allgemeinen sehr weit herabreichen, bis in das Gras hinein. Bevorzugt ist die Unterkante der Umfangswand - die sich zwischen den beiden Ringkanälen befindet derart ausgestaltet, dass die Luft vom zweiten Ringkanal in den ersten Ringkanal unterhalb der Schneideinrichtung, insbesondere des Messers dem ersten Ringkanal zugeführt wird.

Durch eine derartige Luftführung wird erreicht, dass auch bei niedrigen Mähpositionen ausreichende Luftströmung für eine ausreichende Mähleistung zur Verfügung steht. Der erfindungsgemäße Rasenmäher verfügt auch bei niedrigen Mähpositionen über eine ausreichende Luftzufuhr, um die Mahd aus dem Mähkanal zu fördern.

In einer bevorzugten Ausgestaltung der Erfindung wird eine derartige Luftführung dadurch erreicht, dass die Umfangswand im Wesentlichen auf der gleichen Höhe endet wie die Unterkante des Schneidemessers. Hierdurch wird die Luft optimal unterhalb des Scheidemessers vom ersten in den zweiten Ringkanal transportiert. Da die Umfangswand nicht mehr die Schutzfunktion übernimmt, die den Benutzer gegen einen zufälligen Eingriff in das Messer schützen soll, muss die Umfangswand nicht mehr bis unter das Messer reichen. Es reicht somit aus, wenn sich die Umfangswand bis zur Höhe des Messers erstreckt. Die Schutzfunktion übernimmt bei dem erfindungsgemäßen Mäher die Hüllwand.

Dies bedeutet weiterhin, dass der Spalt zwischen der Unterkante der Umfangswand und dem Erdboden groß bemessen werden kann - ungeachtet der Höhe, auf welcher sich das Messer befindet. Ist der Spalt groß, so kann reichlich Luft aus dem zweiten - äußeren - Ringkanal in den ersten - inneren - Ringkanal strömen. Damit ist eine optimale Luftversorgung des Rasenmähers gewährleistet.

Der zweite Ringkanal bringt aber noch einen weiteren Vorteil: Das durch die strömende Luft erzeugte Geräusch wird minimiert. Dies ist darauf zurückzuführen, dass der Spalt zwischen dem Erdboden und der Unterkante der Umfangswand größer bemessen werden kann, so dass die Geschwindigkeit der die Unterkante umströmenden Luft geringer sein kann.

Die Erfindung ist anhand der Zeichnung näher erläutert. Darin ist im Einzelnen Folgendes dargestellt:
- Figur 1: zeigt einen erfindungsgemäßen Rasenmäher in einer Schnittansicht
- Figur 2: zeigt den Rasenmäher gemäß Figur 1 von vorne
- Figur 3a-b: zeigt das Aufstellen des Rasenmähers in eine vertikale Aufbewahrungsposition.

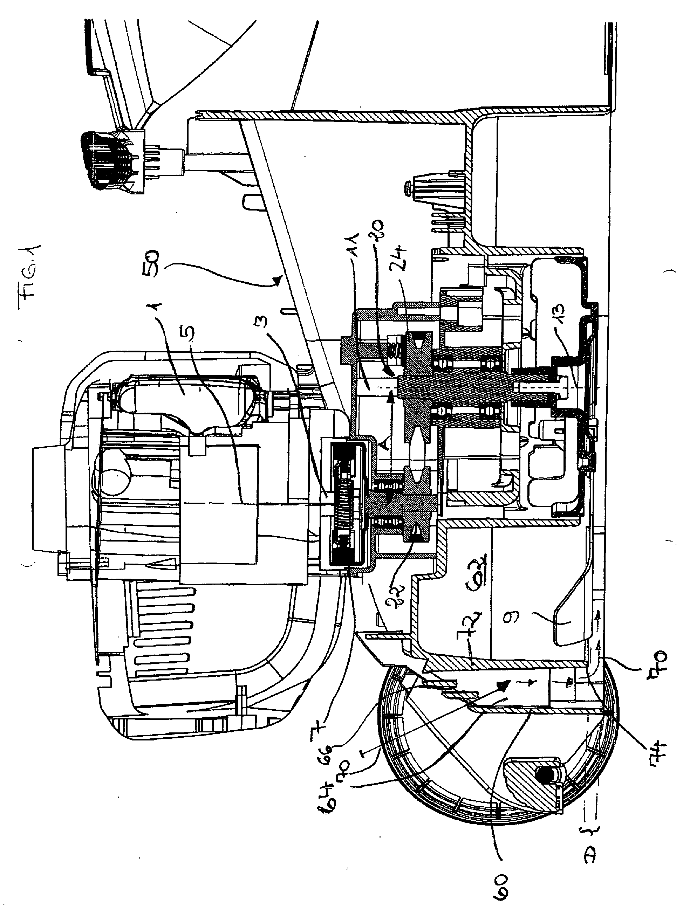

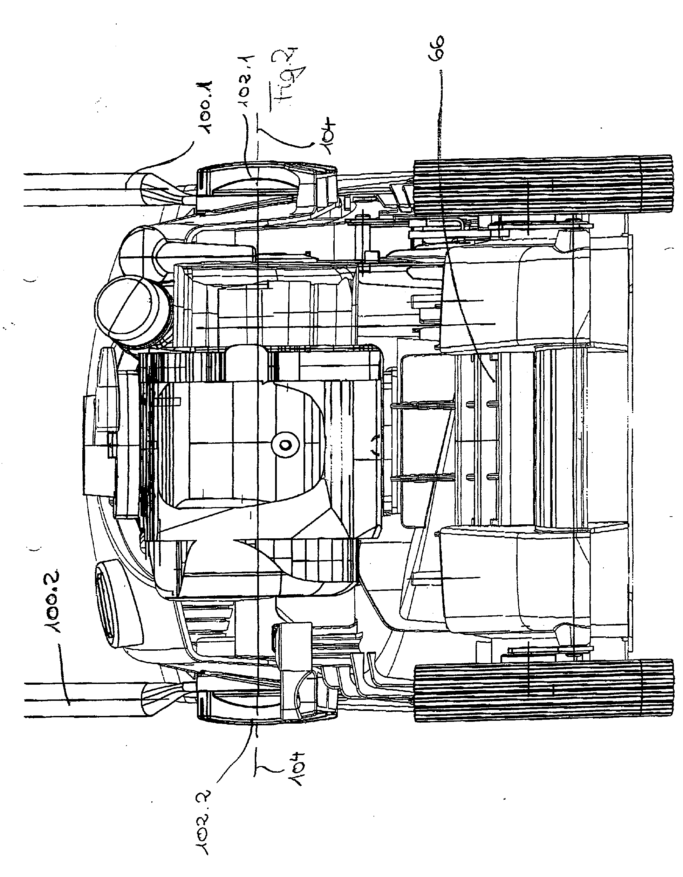

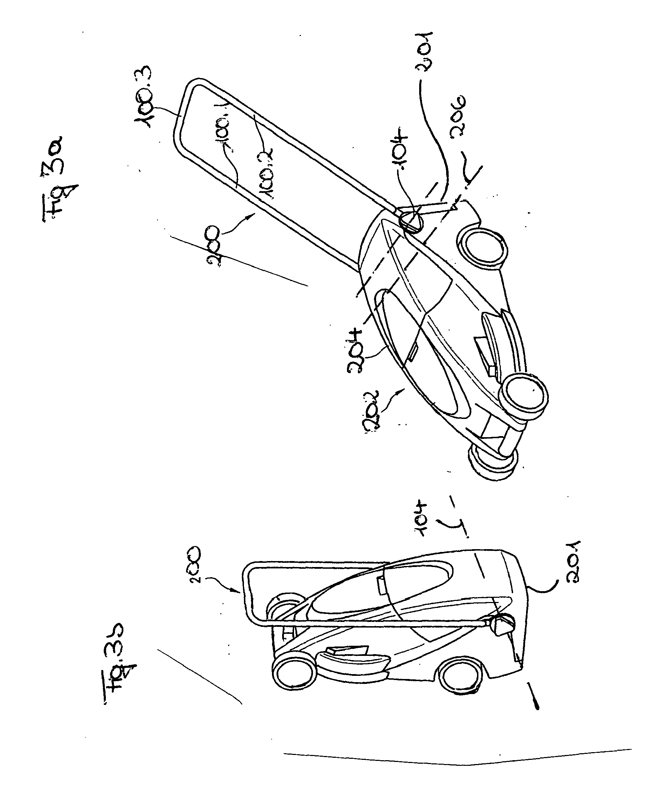

In Figur 1 ist ein Rasenmäher mit einem erfindungsgemäßen Verbrennungsmotor im Schnitt gezeigt. Bei dem in den Figuren 1 und 2 gezeigten Rasenmäher ist der Verbrennungsmotor ein Viertakt-Benzinmotor 1. Der Viertakt-Benzinmotor zeichnet sich dadurch aus, dass er so ausgestaltet ist, dass eine Lagerung in jeder Position möglich ist, ohne dass Betriebsmittel, wie Öl oder Kraftstoff aus dem Motor austritt. Dies ist auch dann der Fall, wenn der Rasenmäher aufrecht, d.h. in einer vertikalen Position aufgestellt wird. Ein Aufstellen in vertikaler Position lässt eine besonders platzsparende Lagerung zu, wenn der Rasenmäher aufbewahrt wird. Das Aufstellen in eine aufrechte Position kann entweder auf der Rückfläche des nicht dargestellten Graßfangbehälters oder einer Gehäuserückwand wie in Figuren 3a bis 3b oder beispielsweise auf den Vorderrädern erfolgen, solange nur mindestens drei Lagerpunkte vorgesehen sind. Der Motor 1 weist eine Abtriebswelle 3 auf, die entlang einer ersten vertikalen Achse 5 angeordnet ist. Die Abtriebswelle 3 umfasst eine Fliehkraftkupplung 7. Die Fliehkraftkupplung stellt nur im Betriebszustand eine kraftübertragende Verbindung zwischen dem Motor 1 und dem Messer 9 der Schneideinrichtung zur Verfügung. Auf diese Art und Weise kann der Motor des Rasenmähers sehr leicht angelassen werden. Erst wenn der Verbrennungsmotor die erforderliche Drehzahl erreicht hat, wird über die Fliehkraftkupplung die Schneideinrichtung zugeschaltet.

Bei der dargestellten Ausführungsform ist die Antriebswelle 11 entlang einer zweiten vertikalen Achse 13 angeordnet. Erste und zweite vertikale Achse weisen einen horizontalen Abstand A voneinander auf.

Die zueinander beabstandete Abtriebswelle 3 des Motors 1 und die Antriebswelle 11 der Schneideinrichtung sind über einen Riementrieb 20 miteinander verbunden. Der Riementrieb 20 umfasste eine erste Riemenscheibe 22 auf der Abtriebswelle 5 des Motors 1 und eine zweite Riemenscheibe 24 auf der Antriebswelle des Messers 9. Die Größe der Riemenscheiben kann so gewählt werden, dass ein vorbestimmtes Über- bzw. Untersetzungsverhältnis eingestellt wird. Falls der Benzinmotor eine hohe Drehzahl, beispielsweise von 6000 U/min aufweist kann durch eine 1:2 Untersetzung eine Drehzahl von 3000 U/min für das Messer 9 eingestellt werden. Durch die Untersetzung ist es möglich das Drehmoment am Messer und damit die Mähleistung zu steigern. Bei dem erfindungsgemäßen Rasenmäher ist es durch die Wahl der Untersetzung möglich eine ganz bestimmte Umdrehungszahl und damit Drehmoment am Messer einzustellen. Durch die freie Einstellbarkeit kann die Drehzahl am Messer und damit das Drehmoment für unterschiedliche Rasenmäher optimal eingestellt werden kann. So kann die Drehzahl am Messer an die Schnittform, die Gehäuseform, die Messerform sowie den Schnittkreisdurchmesser angepasst werden.

Um die Lärmentwicklung des Rasenmähers zu minimieren, kann eine Schalteinrichtung vorgesehen sein, mit der die Motordrehzahl in Abhängigkeit von der Mähleistung, die am Messer zur Verfügung gestellt werden soll, eingestellt werden kann. Beispielsweise kann der Motor, falls der Mäher eine 1:2.

Untersetzung aufweist in der hohen Leistungsstufe mit einer Drehzahl von ungefähr 6000 U/min laufen, so dass am Messer eine Drehzahl von ungefähr 3000 U/min vorliegt und in der Dauerleistungsstufe mit ungefähr 5200 U/min, so dass eine Drehzahl am Messer von ungefähr 2600 U/min vorliegt.

In einer weiteren bevorzugten Ausführungsform ist der Mäher so ausgestaltet, dass die vom Messer von unten her angesaugte Luft in ausreichender Menge und unter ausreichendem Druck in einen Ringkanal gelangt, so dass die Mahd vollständig und problemlos nach außen abgeführt werden kann.

Der Rasenmäher weist des Weiteren vier Räder auf. Diese können vom Motor angetrieben sein. Dies ist jedoch nicht notwendigerweise der Fall.

Der Rasenmäher kann einen abnehmbar angesetzten und verriegelten, in Figur 1 nicht dargestellten, Graßfangbehälter umfassen. Das in Figur 1 dargestellte Gehäuse 50 des Rasenmähers hat einen Auslass, und der Grasfangbehälter hat einen Einlass - beide hier nicht erkennbar. Auslass und Einlass sind deckungsgleich, so dass das Innere des Gehäuses 50 und das Innere des Grasfangbehälters miteinander in leitender Verbindung stehen. Der Grasfangbehälter ist außerdem perforiert. Als Perforation können Schlitze oder Bohrungen oder sonstige Löcher dienen.

In einer besonderen Ausführungsform der Erfindung kann der Grasfangbehälter von einem Teil des Gehäuses umschlossen werden. Er wird dann zum Wechseln aus dem Gehäuse z.B. nach oben herausgenommen und nach dem Entleeren wieder eingesetzt. Ein derartiger Rasenmäher, bei dem das Gehäuse auch den Graßfangbehälter umschließt ist in Fig3a-3b gezeigt.

Falls es sich bei dem Rasenmäher um einen handgeführten Rasenmäher handelt, so umfasst der Rasenmäher einen in Figur 1 nicht dargestellten Führungsholm. Der Führungsholm kann zwei Schenkel sowie einen diese beiden Schenkel miteinander verbindenden Steg umfassen. Der Führungsholm der in Figur 1 nicht dargestellt ist, ist am Gehäuse 50 befestigt. Damit der Rasenmäher auch in eine horizontale Position aufgestellt werden kann, ist der Führungsholm wie in den Figuren 3a und 3b gezeigt um eine horizontale Schwenkachse verschwenkbar.

Bei einem handgeführten Rasenmäher kann eine Schalteinrichtung zum Einstellen einer unterschiedliche Motordrehzahl bevorzugt am in den Figuren 3a und 3b dargestellten Führungsholm befestigt sein.

Um ein in Betrieb setzen des Rasenmähers in einer Nicht-Betriebs-Position, insbesondere in der vertikalen Position zu verhindern kann eine Sicherheitseinrichtung vorgesehen sein. Die Sicherheitsvorrichtung kann ein Schalter sein, der die Stromzufuhr zur Zündeinrichtung des Verbrennungsmotors unterbricht, wenn der Rasenmäher in einer Nicht-Betriebsposition, insbesondere in einer aufrechten Position abgestellt wird. Bevorzugt ist der Schalter nahe der horizontalen Schwenkachse um die bei einem handgeführten Rasenmäher der Führungsholm verschwenkt wird, angeordnet, so dass bei Verschwenken des Führungsholmes aus einer Betriebsposition in eine Nicht-Betriebsposition, die Stromzufuhr zur Zündung des Verbrennungsmotors unterbrochen wird. Der Mäher kann dann nicht mehr gestartet werden.

Um die Mähleistung zu erhöhen kann in einer bevorzugten Ausführungsform der Erfindung eine besondere Art der Luftführung mit einem zweiten Ringraum gezeigt. Die Gehäusevorderwand des Mähers ist mit 60 gekennzeichnet. Die Gehäusevorderwand ist um eine Tiefe D gegenüber dem Schneidmesser nach unter gezogen und übernimmt somit eine Schutzfunktion.

Im Gehäuse ist des Weiteren ein erster Ringkanal 62 oberhalb der Messers 9 vorgesehen sowie ein zweiter Ringkanal 64. In den zweiten Ringkanal 64 strömt über eine Öffnung 66 bei atmosphärischem Druck Luft entlang Pfeil 70. Die Umfangswand 72 zwischen erstem Ringkanal 62 und zweitem Ringkanal 64 ist derart ausgestaltet, dass die im zweiten Ringkanal 64 über die Öffnung 60 einströmende Luft entlang dem Pfeil 70 unterhalb der Schneideinrichtung 9 wie mit vom zweiten Ringraum in den ersten Ringraum überführt wird. Diese Art der Luftführung unterstützt die Mähleistung und erlaubt niedrige Schnitthöhen. Des Weiteren ist zu sehen, dass die Unterkante 74 der Umfangswand 72 im Wesentlichen auf der Höhe der Schneideinrichtung endet. Dies führt dazu, dass die durch die Öffnung 66 einströmende Luft unter das Messer 9 geführt wird und so wie oben beschrieben die Mähleistung unterstützt wird. Anstelle eines Einströmens von Luft unter Atmosphären-Druck in einen zweiten Ringkanal 64 kann auch eine Art Kreislaufführung vorgesehen sein.

Der erste, innere Ringkanal 62 hat kreisförmigen Querschnitt. Er umschließt die Schneideinrichtung und damit das Messer 9 vollständig.

Im Gegensatz hierzu erstreckt sich der zweite, äußere Ringkanal 64, bevorzugt nur auf einem kleineren Kreisbogen um den ersten, inneren Ringkanal 62 herum. Der Umschlingungswinkel braucht nur wenige Grad zugetragen, beispielsweise 5 - 10 Grad. Er wird in der Regel über 30 Grad betragen, möglicherweise auch bis zu 180 Grad.

Figur 2 zeigt eine Vorderansicht des erfindungsgemäßen Rasenmähers. Gleiche Bauteile sind mit denselben Bezugsziffern belegt. Zu erkennen sind die beiden Schenkel 100.1 und 100.2 des Führungsholmes, sowie der Lufteinlass 66 in den zweiten Ringkanal. Des Weiteren zu erkennen sind die Befestigungsschrauben 102.1, 102.2 für die Schenkel 101.1 und 101.2 des Führungsholmes. Werden die Befestigungsschrauben gelöst kann der Führungsholm um die Verschwenkachse 104 verschwenkt werden, beispielsweise wie in Figur 3a und 3b gezeigt von der Betriebsposition in eine Aufbewahrungsposition.

In Figur 3a ist ein erfindungsgemäßer Rasenmäher in der Betriebsposition gezeigt. Der Führungsholm 200 mit Schenkeln 100.1, 100.2 und einem Steg 100.3 ist in die Arbeits- oder Betriebsposition verbracht. Wird der Rasenmäher beispielsweise vertikal auf die Gehäuserückwand 201 wie in Figur 3b gezeigt aufgestellt, so wird der Führungsholm 200 um die Schwenkachse 104 verschwenkt. Durch das Verschwenken des Führungsholmes um die Achse 104 wird ein nicht dargestellter Schalter aktiviert und die Stromzufuhr zur Zündeinrichtung des Verbrennungsmotors unterbrochen. Hierdurch wird sichergestellt, dass der Mäher nicht in der Aufbewahrungsposition in Betrieb gesetzt werden kann.

Bei der in den Figuren 3a und 3b dargestellten Ausführungsform eines erfindungsgemäßen Mähers umschließt das Gehäuse 202 den Grasfangkorb, der vorliegend nicht dargestellt ist. Um den Grasfankorb zu entleeren wird die hintere Gehäusehälfte 204 um eine Gehäuseschwenkachse 206 verschwenkt. Der in der hinteren Gehäusehälfte untergebrachte Grasfangkorb kann dann leicht entnommen werden. Durch die Integration des Grasfangkorbes in das Gehäuse, wird erreicht, dass der Rasenmäher als System, d.h. Mäheinrichtung mit Grasfangkorb in einer vertikalen Position wie in Figur 3b gezeigt aufbewahrt werden kann.

Der erfindungsgemäße Rasenmäher stellt erstmals einen Rasenmäher mit Verbrennungsmotor zur Verfügung, der sich durch eine einfache Bedienbarkeit und hohe Mähleistung auszeichnet.

## Patentansprüche

1. Rasenmäher;
umfassend
eine Schneideinrichtung, die ein Messer (9) mit einer Antriebswelle aufweist;
einen Motor (1), der eine Abtriebswelle (3) aufweist, wobei
der Motor eine Verbrennungskraftmaschine ist,
**dadurch gekennzeichnet, dass**
die Abtriebswelle (3) des Motors (1) mit der Antriebswelle (11) des Messers (9) über eine kraft übertragende Verbindung verbunden ist und
die kraft übertragende Verbindung eine Fliehkraftkupplung (7) umfasst.

2. Rasenmäher nach einem der Anspruch 1,
**dadurch gekennzeichnet, dass**
die Verbrennungskraftmaschine derart ausgestaltet ist, dass der Rasenmäher ohne Betriebsmittelverlust in allen möglichen Position aufstellbar ist.

3. Rasenmäher nach einem der Ansprüche 1 bis 2, **dadurch gekennzeichnet, dass** die Abtriebswelle (3) des Motors entlang einer ersten vertikalen Achse (5) verläuft.

4. Rasenmäher nach einem der Ansprüche 1 bis 3, **dadurch gekennzeichnet, dass** die Antriebswelle (11) des Messers entlang einer zweiten vertikalen Achse (13) verläuft.

5. Rasenmäher nach einem der Ansprüche 1 bis 4, **dadurch gekennzeichnet, dass** die Abtriebswelle (3) des Motors (1) entlang einer ersten vertikalen Achse (5) und die Antriebswelle (11) entlang einer zweiten vertikalen Achse (13) verläuft und erste und zweite Achse eine Abstand (A) zueinander aufweisen.

6. Rasenmäher nach einem der Ansprüche 1 bis 5, **dadurch gekennzeichnet, dass** die kraft übertragende Verbindung ein Riementrieb ist.

7. Rasenmäher nach Anspruch 6, **dadurch gekennzeichnet, dass** der Riementrieb eine an die Verbrennungskraftmaschine angepasste Untersetzung aufweist, so dass an der Schneideinrichtung ein vorbestimmtes Drehmoment erreicht wird.

8. Rasenmäher nach Anspruch 7, **dadurch gekennzeichnet, dass** die Untersetzung im Bereich von 1:1,2 bis 1:6, vorzugsweise im Bereich von 1:1, 5 bis 1:3, insbesondere im Bereich von 1:1,8 bis 1:2,2 liegt.

9. Rasenmäher nach einem der Ansprüche 1 bis 8, **dadurch gekennzeichnet, dass** die Fliehkraftkupplung (7) und der Riementrieb von einem Gehäuse umgeben sind.

10. Rasenmäher nach einem der Ansprüche 1 bis 9, **dadurch gekennzeichnet, dass** die Verbrennungskraftmaschine ein Benzinmotor, wobei die Motordrehzahl im Bereich 500 bis 7500 U/min liegt.

11. Rasenmäher nach einem der Ansprüche 1 bis 10,
**dadurch gekennzeichnet, dass**
der Rasenmäher einen ersten Ringkanal (62) aufweist, wobei erste der Ringkanal (62) eine die Schneideinrichtung umgebende Umfangswand (72) aufweist, die den Flugkreis des Messers (9) umgibt sowie einen zweiten Ringkanal (64), der den ersten Ringkanal (62) wenigstens auf einem Teil von dessen Umfang umgibt und der aus der Umfangswand (72) und einer Gehäusevorderwand (60) des Mähers gebildet wird, wobei der zweite Ringkanal (64) wenigstens eine Öffnung (66) zum Zuführen von Luft aufweist und der zweite Ringkanal mit einem Raum unterhalb des Messers in leitender Verbindung steht.

12. Rasenmäher nach Anspruch 11, **dadurch gekennzeichnet, dass**
die Öffnung (66) des zweiten Ringkanals (64) eine Außenöffnung, die in direkter leitender Verbindung mit der Atmosphäre steht, ist.

13. Rasenmäher nach einem der Ansprüche 1 bis 8, **dadurch gekennzeichnet, dass** sich die Unterkante (74) der Umfangswand (72) im Wesentlichen auf der Höhe des Messers (9) befindet.

14. Rasenmäher nach einem der Ansprüche 1 bis 13, **dadurch gekennzeichnet, dass** der Abstand zwischen der Umfangswand (16) und dem Flugkreis des Messers (9) zwischen einem und 20 mm beträgt.

15. Rasenmäher nach einem der Ansprüche 1 bis 14, **dadurch gekennzeichnet, dass** das Messer (9) höhenverstellbar ist, insbesondere derart, dass Schnitthöhen geringer als 20 mm eingestellt werden können.

16. Rasenmäher nach einem der Ansprüche 1 bis 15, **dadurch gekennzeichnet, dass** der Rasenmäher eine Schalteinrichtung umfasst, mit der die Umdrehungsdrehzahl des Messers (9) auf mindestens zwei Werte eingestellt werden kann.

17. Rasenmäher nach einem der Ansprüche 1 bis 16, **dadurch gekennzeichnet, dass** die Schalteinrichtung einen Einstellschalter umfasst, der die Drehzahl des Motors (1) einstellt.

18. Rasenmäher nach einem der Ansprüche 1 bis 17, **dadurch gekennzeichnet, dass** der Rasenmäher eine Sicherheitseinrichtung umfasst, wobei die
Sicherheitseinrichtung das Inbetriebsetzen des Motors (1) in Nicht-Betriebspositionen verhindert.

19. Rasenmäher nach Anspruch 18,
**dadurch gekennzeichnet, dass** die Sicherheitseinrichtung einen Schalter umfasst, der die Stromzufuhr zur Zündung unterbricht.

20. Rasenmäher nach einem der Ansprüche 1 bis 19, **dadurch gekennzeichnet, dass** der Rasenmäher einen Führungsholm (200) umfasst, der um eine Achse (104) verschwenkbar ist.

21. Rasenmäher nach einem der Ansprüche 1 bis 20,
**dadurch gekennzeichnet, dass** der Rasenmäher ein Gehäuse (202) umfasst, das einen Grasfangkorb umschließt.
